(19) Europäisches Patentamt / European Patent Office / Office européen des brevets

(11) **EP 3 261 267 A1**

(12) **EUROPEAN PATENT APPLICATION**

(43) Date of publication:
**27.12.2017 Bulletin 2017/52**

(51) Int Cl.:
*H04B 7/06* (2006.01)          *H04B 7/08* (2006.01)

(21) Application number: **17173058.3**

(22) Date of filing: **26.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.06.2016   US 201662354256 P**
 **18.07.2016   US 201662363535 P**
 **28.10.2016   US 201662414376 P**

(71) Applicant: **ASUSTek Computer Inc.**
**Peitou, Taipei-City 112 (TW)**

(72) Inventors:
 • **GUO, Yu-Hsuan**
 **Taipei City 112 (TW)**
 • **OU, Meng-Hui**
 **Taipei City 112 (TW)**
 • **TSAI, Hsin-Hsi**
 **Taipei City 112 (TW)**
 • **KUO, Richard Lee-Chee**
 **Taipei City 112 (TW)**

(74) Representative: **Hoefer & Partner Patentanwälte mbB**
**Pilgersheimer Straße 20**
**81543 München (DE)**

(54) **METHOD AND APPARATUS FOR UTILIZING UE (USER EQUIPMENT) BEAMFORMING IN A WIRELESS COMMUNICATION SYSTEM**

(57)     A method and apparatus are disclosed for utilizing UE beamforming in a wireless communication system. Preferably, the method includes the UE performing measurement to obtain a measurement result associated with a cell (1905). The method also includes the UE determining whether to use the UE beamforming in the cell at least based on the measurement result, wherein the UE uses the UE beamforming in the cell if the measurement result is worse than a first threshold (1910).

```
                          ┌─────────────┐
                          │    START    │                1900
                          └──────┬──────┘
1905                             │
    ┌────────────────────────────▼────────────────────────────┐
    │  Performing, by the UE, measurement to obtain a          │
    │  measurement result associated with a cell               │
    └────────────────────────────┬────────────────────────────┘
1910                             │
    ┌────────────────────────────▼────────────────────────────┐
    │  Determining, by the UE, whether to use UE beamforming   │
    │  in the cell at least based on the measurement result,   │
    │  wherein the UE uses UE beamforming in the cell if the   │
    │  measurement result is worse than a first threshold      │
    └────────────────────────────┬────────────────────────────┘
                                 │
                          ┌──────▼──────┐
                          │     END     │
                          └─────────────┘
```

**FIG. 19**

EP 3 261 267 A1

## Description

This disclosure generally relates to wireless communication networks, and more particularly, to a method and apparatus for utilizing UE beamforming in a wireless communication system.

## BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

## SUMMARY

A method and apparatus for utilizing UE beamforming in a wireless communication system are disclosed and defined in independent claims 1,and 11, respectively. Preferred embodiments thereof are defined in the dependent claims, respectively. Preferably, the method includes the UE performing measurement to obtain a measurement result associated with a cell. The method also includes the UE determining whether to use the UE beamforming in the cell at least based on the measurement result, wherein the UE uses the UE beamforming in the cell if the measurement result is worse than a first threshold.

## BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a diagram according to one exemplary embodiment.

FIG. 6 is a diagram according to one exemplary embodiment.

FIG. 7 is a diagram according to one exemplary embodiment.

FIG. 8 is a diagram according to one exemplary embodiment.

FIG. 9 is a diagram according to one exemplary embodiment.

FIG. 10 is a diagram according to one exemplary embodiment.

FIG. 11 is a diagram according to one exemplary embodiment.

FIG. 12 is a reproduction of Figure 3 of 3GPP R2-162251.

FIG. 13 is a reproduction of Figure 4 of 3GPP R2-162251.

FIG. 14 is a flow chart according to one exemplary embodiment.

FIG. 15 is a flow chart according to one exemplary embodiment.

FIG. 16 is a flow chart according to one exemplary embodiment.

FIG. 17 is a reproduction of Figure 10.1.5.1-1 of 3GPP TS 36.300 v13.3.0.

FIG. 18 is a reproduction of Figure 10.1.5.2-1 of 3GPP TS 36.300 v13.3.0.

FIG. 19 is a flow chart according to one exemplary embodiment.

FIG. 20 is a flow chart according to one exemplary embodiment.

FIG. 21 is a flow chart according to one exemplary embodiment.

FIG. 22 is a flow chart according to one exemplary embodiment.

FIG. 23 is a diagram according to one exemplary embodiment.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: R2-162366, "Beam Forming Impacts", Nokia, Alcatel-Lucent; R2-163716, "Discussion on terminology of beamforming based high frequency NR", Samsung; R2-162709, "Beam support in NR", Intel; R2-162762, "Active Mode Mobility in NR: SINR drops in higher frequencies", Ericsson; R3-160947, "TR 38.801 V0.1.0, Study on New Radio Access Technology; Radio Access Architecture and Interfaces"; R2-164306, "Summary of email discussion [93bis#23][NR] Deployment scenarios", NTT DOCOMO; 3GPP RAN2#94 meeting minute; R2-163879, "RAN2 Impacts in HF-NR", MediaTeK; R2-162210, "Beam level management <-> Cell level mobility", Samsung; R2-163471, "Cell concept in NR", CATT; R2-164270, "General considerations on LTE-NR tight interworking", Huawei; R2-162251, "RAN2 aspects of high frequency New RAT", Samsung; TS 306.304 v13.1.0, "E-UTRA; UE procedures in idle mode (Release 13)"; TS 36.300 v13.3.0, "E-UTRA and E-UTRAN; Overall description; Stage 2"; TS 36.213 v13.1.1, "E-UTRA; Physical layer procedure (Release 13)".

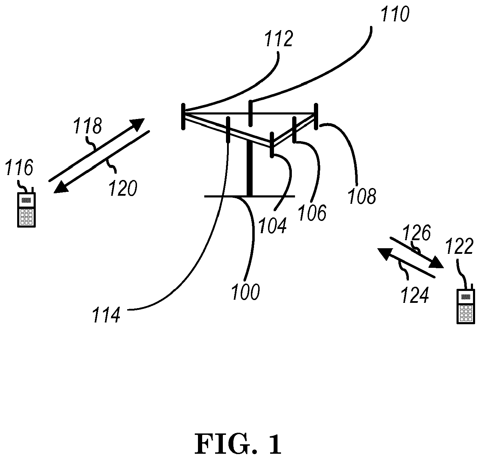

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

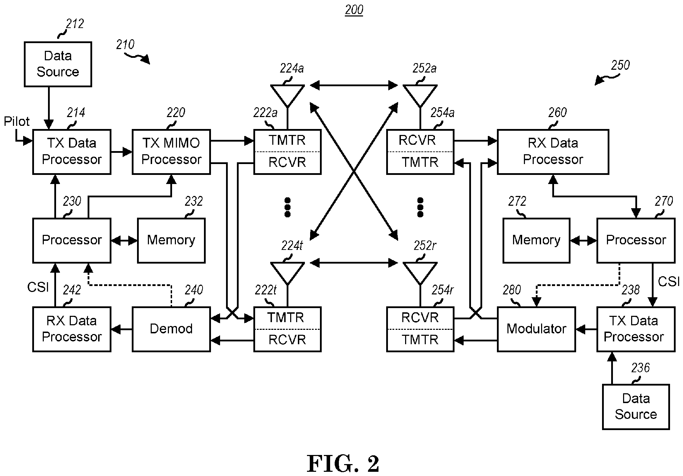

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

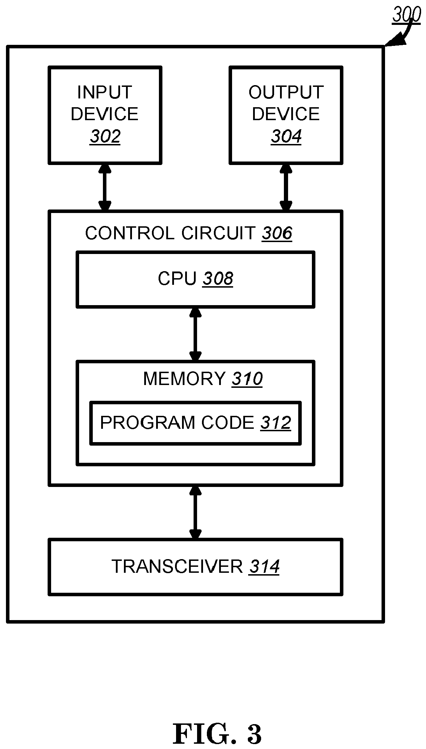

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

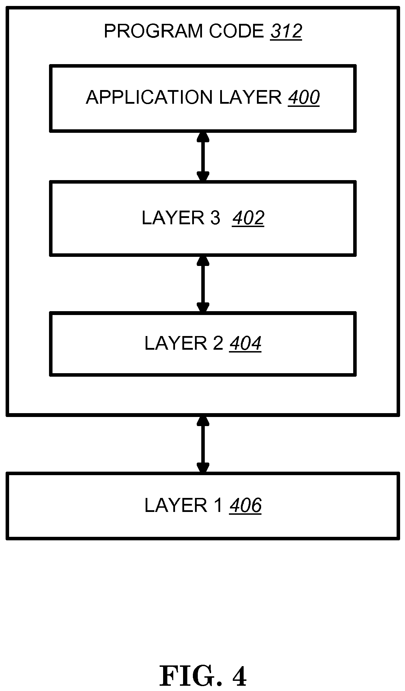

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP standardization activities on next generation (i.e., 5G) access technology have been launched since March 2015. The next generation access technology aims to support the following three families of usage scenarios for satisfying both the urgent market needs and the more long-term requirements set forth by the ITU-R IMT-2020:

- eMBB (enhanced Mobile Broadband),

- mMTC (massive Machine Type Communications), and

- URLLC (Ultra-Reliable and Low Latency Communications).

An objective of the 5G study item on new radio access technology is to identify and develop technology components needed for new radio systems which should be able to use any spectrum band ranging at least up to 100 GHz. Supporting carrier frequencies up to 100GHz brings a number of challenges in the area of radio propagation. As the carrier frequency increases, the path loss also increases.

Based on 3GPP R2-162366, in lower frequency bands (e.g., current LTE bands < 6GHz) the required cell coverage may be provided by forming a wide sector beam for transmitting downlink common channels. However, utilizing wide sector beam on higher frequencies (>> 6GHz) the cell coverage is reduced with same antenna gain. Thus, in order to provide required cell coverage on higher frequency bands, higher antenna gain is needed to compensate the increased path loss. To increase the antenna gain over a wide sector beam, larger antenna arrays (number of antenna elements ranging from tens to hundreds) are used to form high gain beams.

As a consequence the high gain beams being narrow compared to a wide sector beam, multiple beams for transmitting downlink common channels are needed to cover the required cell area. The number of concurrent high gain beams that access point is able to form may be limited by the cost and complexity of the utilized transceiver architecture. In practice, on higher frequencies, the number of concurrent high gain beams is much less than the total number of beams required to cover the cell area. In other words, the access point could only cover part of the cell area by using a subset of beams at any given time.

Based on 3GPP R2-163716, beamforming is a signal processing technique used in antenna arrays for directional signal transmission/reception. With beamforming, a beam can be formed by combining elements in a phased array of antennas in such a way that signals at particular angles experience constructive interference while others experience destructive interference. Different beams can be utilized simultaneously through multiple arrays of antennas.

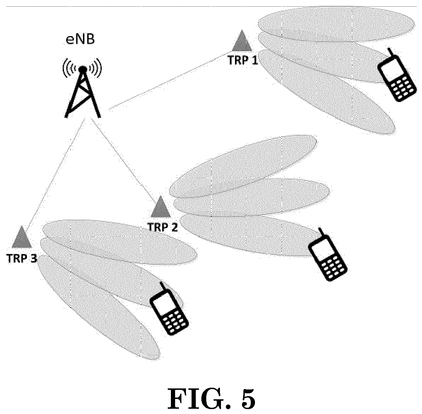

Based on 3GPP R2-162708 and shown in FIG. 5, an eNB (evolved Node B) may have multiple TRPs (either centralized or distributed). Each TRP (Transmission/Reception Point) can form multiple beams. The number of beams and the number of simultaneous beams in the time/frequency domain depend on the number of antenna array elements and the RF (Radio Frequency) at the TRP.

Potential mobility type for NR can be listed as follows:

• Intra-TRP mobility,

• Inter-TRP mobility, and

• Inter-NR eNB mobility.

Based on 3GPP R2-162762, reliability of a system purely relying on beamforming and operating in higher frequencies might be challenging since the coverage might be more sensitive to both time and space variations. As a consequence of that the SINR (Signal to Interference plus Noise Ratio) of that narrow link can drop much quicker than in the case of LTE.

Through using antenna arrays at access nodes with the number of elements in the hundreds, fairly regular grid-of-beams coverage patterns with tens or hundreds of candidate beams per node may be created. The coverage area of an individual beam from such array may be small, down to the order of some tens of meters in width. As a consequence, channel quality degradation outside the current serving beam area is quicker than in the case of wide area coverage, as provided by LTE.

For LTE, cell selection and cell reselection is specified in 3GPP TS 36.304. For clarification, 3GPP TS 36.304 states:

**Camped on a cell:** UE has completed the cell selection/reselection process and has chosen a cell. The UE monitors system information and (in most cases) paging information.

**Serving cell:** The cell on which the UE is camped.

**Suitable Cell:** This is a cell on which an UE may camp. For a E-UTRA cell, the criteria are defined in subclause 4.3, for a UTRA cell in [8], and for a GSM cell the criteria are defined in [9].

<u>**Suitable Cell:**</u>

A "suitable cell" is a cell on which the UE may camp on to obtain normal service. The UE shall have a valid USIM and such a cell shall fulfil all the following requirements.

- The cell is part of either:

  - the selected PLMN, or:
  - the registered PLMN, or:
  - a PLMN of the Equivalent PLMN list

- For a CSG cell, the cell is a CSG member cell for the UE;

According to the latest information provided by NAS:

- The cell is not barred, see subclause 5.3.1;
- The cell is part of at least one TA that is not part of the list of "forbidden tracking areas for roaming" [4], which belongs to a PLMN that fulfils the first bullet above;
- The cell selection criteria are fulfilled, see subclause 5.2.3.2;

If more than one PLMN identity is broadcast in the cell, the cell is considered to be part of all TAs with TAIs constructed from the PLMN identities and the TAC broadcast in the cell.

**5.2.1 Introduction**

UE shall perform measurements for cell selection and reselection purposes as specified in [10].

The NAS can control the RAT(s) in which the cell selection should be performed, for instance by indicating RAT(s) associated with the selected PLMN, and by maintaining a list of forbidden registration area(s) and a list of equivalent PLMNs. The UE shall select a suitable cell based on idle mode measurements and cell selection criteria.

In order to speed up the cell selection process, stored information for several RATs may be available in the UE.

When camped on a cell, the UE shall regularly search for a better cell according to the cell reselection criteria. If a better cell is found, that cell is selected. The change of cell may imply a change of RAT. Details on performance requirements for cell reselection can be found in [10].

The NAS is informed if the cell selection and reselection results in changes in the received system information relevant for NAS.

For normal service, the UE shall camp on a suitable cell, tune to that cell's control channel(s) so that the UE can:

- Receive system information from the PLMN; and

  - receive registration area information from the PLMN, e.g., tracking area information; and
  - receive other AS and NAS Information; and

- if registered:

  - receive paging and notification messages from the PLMN; and
  - initiate transfer to connected mode.

**5.2.3.2 Cell Selection Criterion**

The cell selection criterion S in normal coverage is fulfilled when:

$$Srxlev > 0 \ \ AND \ \ Squal > 0$$

where:

$$Srxlev = Q_{rxlevmeas} - (Q_{rxlevmin} + Q_{rxlevminoffset}) - Pcompensation - Qoffset_{temp}$$

$$Squal = Q_{qualmeas} - (Q_{qualmin} + Q_{qualminoffset}) - Qoffset_{temp}$$

where:

| | |
|---|---|
| Srxlev | Cell selection RX level value (dB) |
| Squal | Cell selection quality value (dB) |
| $Qoffset_{temp}$ | Offset temporarily applied to a cell as specified in [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm) |
| $Q_{qualmin}$ | Minimum required quality level in the cell (dB) |
| $Q_{rxlevminoffset}$ | Offset to the signalled $Q_{rxlevmin}$ taken into account in the Srxlev evaluation as a result of a periodic search for a higher priority PLMN while camped normally in a VPLMN [5] |
| $Q_{qualminoffset}$ | Offset to the signalled $Q_{qualmin}$ taken into account in the Squal evaluation as a result of a periodic search for a higher priority PLMN while camped normally in a VPLMN [5] |
| Pcompensation | If the UE supports the *additionalPmax* in the *NS-PmaxList,* if present, in SIB1, SIB3 and SIB5: $max(P_{EMAX1} - P_{PowerClass}, 0) - (min(P_{EMAX2}, P_{PowerClass}) - min(P_{EMAX1}, P_{PowerClass}))$ (dB); else: $max(P_{EMAX1} - P_{Powerclass}, 0)$ (dB); |
| $P_{EMAX1}$, $P_{EMAX2}$ | Maximum TX power level an UE may use when transmitting on the uplink in the cell (dBm) defined as $P_{EMAX}$ in [TS 36.101]. $P_{EMAX1}$ and $P_{EMAX2}$ are obtained from the *p-Max* and the *NS-PmaxList* respectively in SIB1, SIB3 and SIB5 as specified in TS 36.331 [3]. |
| $P_{PowerClass}$ | Maximum RF output power of the UE (dBm) according to the UE power class as defined in [TS 36.101] |

### 5.2.4.1 Reselection priorities handling

Absolute priorities of different E-UTRAN frequencies or inter-RAT frequencies may be provided to the UE in the system information, in the *RRCConnectionRelease* message, or by inheriting from another RAT at inter-RAT cell (re)selection. In the case of system information, an E-UTRAN frequency or inter-RAT frequency may be listed without providing a priority (i.e. the field *cellReselectionPriority* is absent for that frequency). If priorities are provided in dedicated signalling, the UE shall ignore all the priorities provided in system information. If UE is in *camped on any cell* state, UE shall only apply the priorities provided by system information from current cell, and the UE preserves priorities provided by dedicated signalling and *deprioritisationReq* received in *RRCConnectionReject* unless specified otherwise. When the UE in *camped normally* state, has only dedicated priorities other than for the current frequency, the UE shall consider the current frequency to be the lowest priority frequency (i.e. lower than any of the network configured values).

### 5.2.4.6 Intra-frequency and equal priority inter-frequency Cell Reselection criteria

The cell-ranking criterion $R_s$ for serving cell and $R_n$ for neighbouring cells is defined by:

$$R_s = Q_{meas,s} + Q_{Hyst} - Qoffset_{temp}$$
$$R_n = Q_{meas,n} - Qoffset - Qoffset_{temp}$$

where:

| $Q_{meas}$ | RSRP measurement quantity used in cell reselections. |
|---|---|
| Qoffset | For intra-frequency: Equals to $Qoffset_{s,n}$, if $Qoffset_{s,n}$ is valid, otherwise this equals to zero. For inter-frequency: Equals to $Qoffset_{s,n}$ plus $Qoffset_{frequency}$, if $Qoffset_{s,n}$ is valid, otherwise this equals to $Qoffset_{frequency}$. |
| $Qoffset_{temp}$ | Offset temporarily applied to a cell as specified in [3] |

The UE shall perform ranking of all cells that fulfil the cell selection criterion S, which is defined in 5.2.3.2, but may exclude all CSG cells that are known by the UE not to be CSG member cells.

The cells shall be ranked according to the R criteria specified above, deriving $Q_{meas,n}$ and $Q_{meas,s}$ and calculating the R values using averaged RSRP results.

If a cell is ranked as the best cell the UE shall perform cell reselection to that cell. If this cell is found to be not-suitable, the UE shall behave according to subclause 5.2.4.4.

In all cases, the UE shall reselect the new cell, only if the following conditions are met:

- the new cell is better ranked than the serving cell during a time interval $Treselection_{RAT}$;
- more than 1 second has elapsed since the UE camped on the current serving cell.

**5.2.4.7 Cell reselection parameters in system information broadcasts**

Cell reselection parameters are broadcast in system information and are read from the serving cell as follows:

**cellReselectionPriority**

This specifies the absolute priority for E-UTRAN frequeny or UTRAN frequency or group of GERAN frequencies or band class of CDMA2000 HRPD or band class of CDMA2000 1xRTT.

**cellReselectionSubPriority**

This specifies the fractional priority value added to cellReselectionPriority for E-UTRAN frequency.

**$Qoffset_{s,n}$**

This specifies the offset between the two cells.

**$Qoffset_{frequency}$**

Frequency specific offset for equal priority E-UTRAN frequencies.

**$QOffset_{temp}$**

This specifies the additional offset to be used for cell selection and re-selection. It is temporarily used in case the RRC Connection Establishment fails on the cell as specified in [3].

**Qhyst**

This specifies the hysteresis value for ranking criteria.

**$Q_{qualmin}$**

This specifies the minimum required quality level in the cell in dB.

**$Q_{rxlevmin}$**

This specifies the minimum required Rx level in the cell in dBm.

**RedistributionFactorFreq**

This specifies the redistribution factor for a neighbour E-UTRAN frequency.

**RedistributionFactorCell**

This specifies the redistribution factor for a neighbour E-UTRAN cell.

**RedistributionFactorServing**

This specifies the redistribution factor for serving cell or serving frequency.

**Treselection$_{RAT}$**

This specifies the cell reselection timer value. For each target E-UTRA frequency and for each RAT (other than E-UTRA) a specific value for the cell reselection timer is defined, which is applicable when evaluating reselection within E-UTRAN or towards other RAT (i.e. Treselection$_{RAT}$ for E-UTRAN is Treselection$_{EUTRA}$, for UTRAN Treselection$_{UTRA}$ for GERAN Treselection$_{GERA}$, for Treselection$_{CDMA\_HRPD}$, and for Treselection$_{CDMA\_1xRTT}$).

•    Note: Treselection$_{RAT}$ is not sent on system information, but used in reselection rules by the UE for each RAT.

**Treselection$_{EUTRA\_CE}$**

This specifies the cell reselection timer value Treselection$_{RAT}$ for E-UTRAN UE in enhanced coverage among same priority cell. The parameter can be set per E-UTRAN frequency.

**Treselection$_{EUTRA}$**

This specifies the cell reselection timer value Treselection$_{RAT}$ for E-UTRAN. The parameter can be set per E-UTRAN frequency [3].

**Treselection$_{UTRA}$**

This specifies the cell reselection timer value Treselection$_{RAT}$ for UTRAN.

**Treselection$_{GERA}$**

This specifies the cell reselection timer value Treselection$_{RAT}$ for GERAN.

**Treselection$_{CDMA\_HRPD}$**

This specifies the cell reselection timer value Treselection$_{RAT}$ for CDMA HRPD.

**Treselection$_{CDMA\_1xRTT}$**

This specifies the cell reselection timer value Treselection$_{RAT}$ for CDMA 1xRTT.

**Thresh$_{X, HighP}$**

This specifies the Srxlev threshold (in dB) used by the UE when reselecting towards a higher priority RAT/ frequency than the current serving frequency. Each frequency of E-UTRAN and UTRAN, each group of GERAN frequencies, each band class of CDMA2000 HRPD and CDMA2000 1xRTT might have a specific threshold.

**Thresh$_{X, HighQ}$**

This specifies the Squal threshold (in dB) used by the UE when reselecting towards a higher priority RAT/ frequency than the current serving frequency. Each frequency of E-UTRAN and UTRAN FDD might have a specific threshold.

**Thresh$_{X, LowP}$**

This specifies the Srxlev threshold (in dB) used by the UE when reselecting towards a lower priority RAT/ frequency than the current serving frequency. Each frequency of E-UTRAN and UTRAN, each group of GERAN frequencies, each band class of CDMA2000 HRPD and CDMA2000 1xRTT might have a specific threshold.

**Thresh$_{X, LowQ}$**

This specifies the Squal threshold (in dB) used by the UE when reselecting towards a lower priority RAT/ frequency than the current serving frequency. Each frequency of E-UTRAN and UTRAN FDD might have a specific threshold.

**Thresh$_{Serving, LowP}$**

This specifies the Srxlev threshold (in dB) used by the UE on the serving cell when reselecting towards a lower priority RAT/ frequency.

**Thresh$_{Serving, LowQ}$**

This specifies the Squal threshold (in dB) used by the UE on the serving cell when reselecting towards a lower priority RAT/ frequency.

**S$_{IntraSearchP}$**

This specifies the Srxlev threshold (in dB) for intra-frequency measurements.

**S$_{IntraSearchQ}$**

This specifies the Squal threshold (in dB) for intra-frequency measurements.

**S$_{nonIntraSearchP}$**

This specifies the Srxlev threshold (in dB) for E-UTRAN inter-frequency and inter-RAT measurements.

**S$_{nonIntraSearchQ}$**

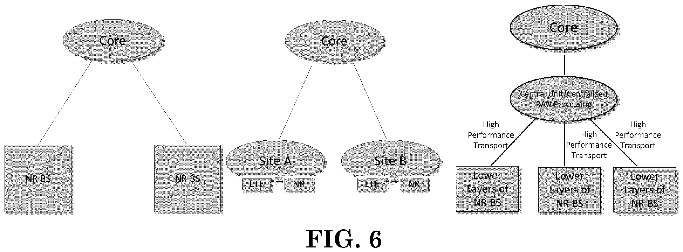

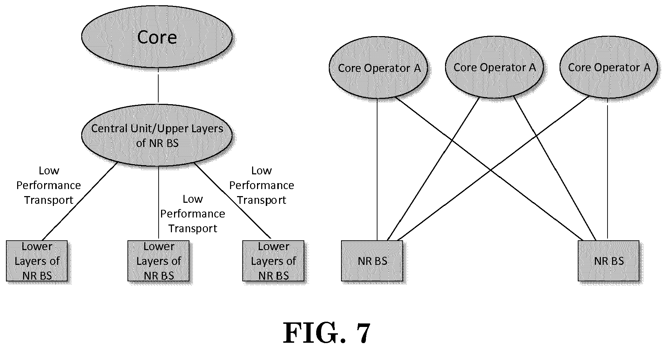

This specifies the Squal threshold (in dB) for E-UTRAN inter-frequency and inter-RAT measurements.
Based on 3GPP R3-160947, the scenarios illustrated in FIGS. 6 and 7 should be considered for support by the NR (New Radio) radio network architecture.
Based on 3GPP R2-164306, the following scenarios in terms of cell layout for standalone NR are captured to be studied:

- Macro cell only deployment

- Heterogeneous deployment

- Small cell only deployment

Based on the 3GPP RAN2#94 meeting minutes, 1 NR eNB corresponds to 1 or many TRPs. Two levels of network controlled mobility as follows:

- RRC driven at "cell" level.

- Zero/Minimum RRC involvement (e.g., at MAC /PHY)

Based on 3GPP R2-162210, the principle of 2-level mobility handling may possibly be kept in 5G as follows:

A) Cell level mobility

a. Cell selection/reselection in IDLE, handover in CONN

b. Handled by RRC in CONN state

B) Beam level management

a. L1 handles appropriate selection of the TRP to use for a UE and the optimal beam direction

In general, 5G systems are expected to rely more heavily on "beam based mobility" to handle UE mobility, in addition to regular handover based UE mobility. Technologies like MIMO, fronthauling, C-RAN (Cloud RAN), and NFV (Network Function Virtualization) will allow the coverage area controlled by one "5G Node" to grow, thus increasing the possibilities for beam level management and reducing the need for cell level mobility. All mobility within the coverage area of one 5G node could in theory be handled based on beam level management, which would leave handovers only to be used for mobility to the coverage area of another 5G Node.

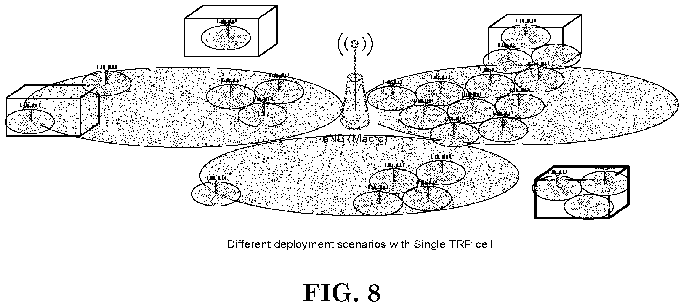

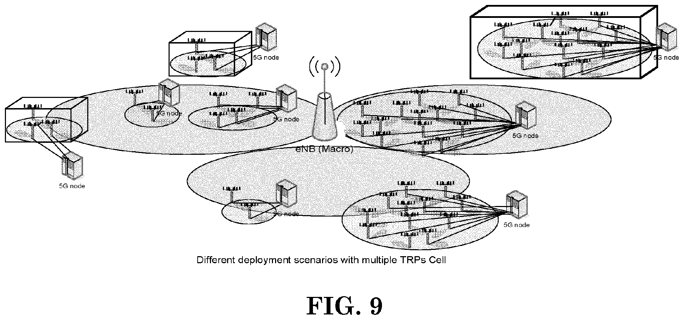

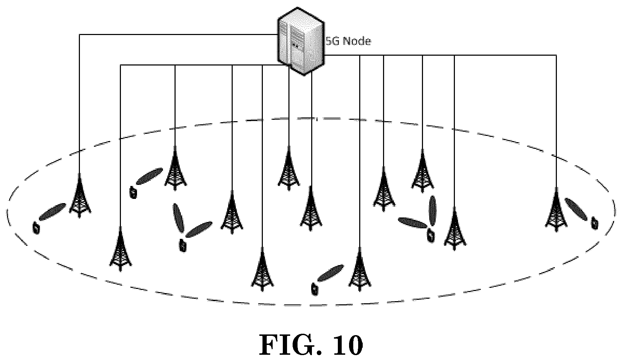

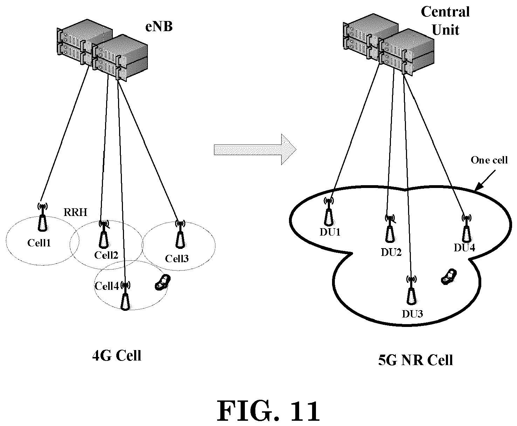

FIGS. 8 to 11 show some examples of the concept of a cell in 5G NR. FIG. 8 shows a deployment with single TRP cell. FIG. 9 generally shows a deployment with multiple TRP cell. FIG. 10 generally illustrates one 5G cell comprising a 5G node and multiple TRPs. FIG. 11 generally shows a comparison between a LTE cell and a NR cell.

Apart from the handover based on RRM (Radio Resource Management) measurement, a 5G UE should be able to adapt the serving beam to maintain 5G connectivity subject to beam quality fluctuation or UE intra-cell mobility. In order to do that, 5G Node-B and UE should be able to track and change the serving beam properly (called beam tracking hereafter).

### *Random Access Procedure in LTE as described in 3GPP TS 36.300*

The random access procedure is performed for the following events related to the PCell:

- Initial access from RRC_IDLE;

- RRC Connection Re-establishment procedure;

- Handover;

- DL data arrival during RRC_CONNECTED requiring random access procedure:

  - E.g. when UL synchronisation status is "non-synchronised".

- UL data arrival during RRC_CONNECTED requiring random access procedure:

  - E.g. when UL synchronisation status is "non-synchronised" or there are no PUCCH resources for SR available.

- For positioning purpose during RRC_CONNECTED requiring random access procedure;

  - E.g. when timing advance is needed for UE positioning.

The random access procedure is also performed on a SCell to establish time alignment for the corresponding sTAG.

Furthermore, the random access procedure takes two distinct forms:

- Contention based (applicable to first five events);

- Non-contention based (applicable to only handover, DL data arrival, positioning and obtaining timing advance alignment for a sTAG).

Normal DL/UL transmission can take place after the random access procedure.

In LTE, two following types of RA procedure are defined: contention-based and contention-free (Non-contention based).

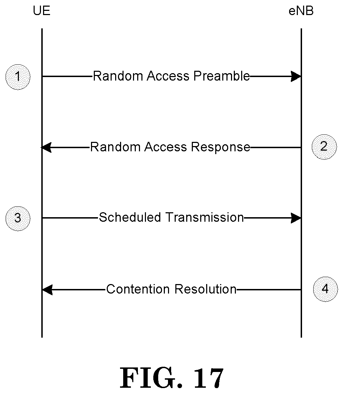

*Contention based random access procedure* - Figure 10.1.5.1-1 of 3GPP TS 36.300 v13.3.0 is reproduced as FIG. 17 to illustrate the contention based random access procedure. The four steps of the contention based random access procedures are:

1) *Random Access Preamble on RACH in uplink (Msg1)*:

- There are two possible groups defined and one is optional. If both groups are configured the size of message 3 and the pathloss are used to determine which group a preamble is selected from. The group to which a preamble belongs provides an indication of the size of the message 3 and the radio conditions at the UE. The preamble group information along with the necessary thresholds are broadcast on system information.

2) *Random Access Response generated by MAC on DL-SCH (Msg2)*:

- Semi-synchronous (within a flexible window of which the size is one or more TTI) with message 1;

- No HARQ;

- Addressed to RA-RNTI on PDCCH;

- Conveys at least RA-preamble identifier, Timing Alignment information for the pTAG, initial UL grant and assignment of Temporary C-RNTI (which may or may not be made permanent upon Contention Resolution);

- Intended for a variable number of UEs in one DL-SCH message.

3) *First scheduled UL transmission on UL-SCH (Msg3)*:

- Uses HARQ;

- Size of the transport blocks depends on the UL grant conveyed in step 2.

- For initial access:

  - Conveys the RRC Connection Request generated by the RRC layer and transmitted via CCCH;

  - Conveys at least NAS UE identifier but no NAS message;

  - RLC TM: no segmentation.

- For RRC Connection Re-establishment procedure:

  - Conveys the RRC Connection Re-establishment Request generated by the RRC layer and transmitted via CCCH;

  - RLC TM: no segmentation;

- Does not contain any NAS message.

- After handover, in the target cell:

  - Conveys the ciphered and integrity protected RRC Handover Confirm generated by the RRC layer and transmitted via DCCH;

  - Conveys the C-RNTI of the UE (which was allocated via the Handover Command);

- Includes an uplink Buffer Status Report when possible.

- For other events:

  - Conveys at least the C-RNTI of the UE.

*4) Contention Resolution on DL (Msg4)*:

- Early contention resolution shall be used i.e. eNB does not wait for NAS reply before resolving contention;

- Not synchronised with message 3;

- HARQ is supported;

- Addressed to:

  - The Temporary C-RNTI on PDCCH for initial access and after radio link failure;

  - The C-RNTI on PDCCH for UE in RRC_CONNECTED.

- HARQ feedback is transmitted only by the UE which detects its own UE identity, as provided in message 3, echoed in the Contention Resolution message;

- For initial access and RRC Connection Re-establishment procedure, no segmentation is used (RLC-TM).

The Temporary C-RNTI is promoted to C-RNTI for a UE which detects RA success and does not already have a C-RNTI; it is dropped by others. A UE which detects RA success and already has a C-RNTI, resumes using its C-RNTI.

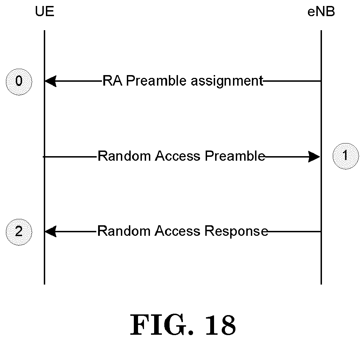

***Non-contention based (Contention free) random access procedure -*** Figure 10.1.5.2-1 of 3GPP TS 36.300 v13.3.0 is reproduced as FIG. 18 to illustrate the contention based random access procedure. The three steps of the non-contention based random access procedures are:

*0) Random Access Preamble assignment via dedicated signalling in DL (Msg0)*:

- eNB assigns to UE a non-contention Random Access Preamble (a Random Access Preamble not within the set sent in broadcast signalling).

- Signalled via:

  - HO command generated by target eNB and sent via source eNB for handover;

  - PDCCH in case of DL data arrival or positioning;

  - PDCCH for initial UL time alignment for a sTAG.

*1) Random Access Preamble on RACH in uplink (Msg1)*:

- UE transmits the assigned non-contention Random Access Preamble.

*2) Random Access Response on DL-SCH (Msg2)*:

- Semi-synchronous (within a flexible window of which the size is two or more TTIs) with message 1;

- No HARQ;

- Addressed to RA-RNTI on PDCCH;

- Conveys at least:

  - Timing Alignment information and initial UL grant for handover;

  - Timing Alignment information for DL data arrival;

  - RA-preamble identifier;

  - Intended for one or multiple UEs in one DL-SCH message.

*Terminology* & *assumption* - The following terminology and assumption may be used hereafter:

- **BS:** A network central unit in NR which is used to control one or multiple TRPs which are associated with one or multiple cells. Communication between BS and TRP(s) is via fronthaul. BS could also be referred to as central unit (CU), eNB, or NodeB.

- **TRP:** A transmission and reception point provides network coverage and directly communicates with UEs. TRP could also be referred to as distributed unit (DU).

- **Cell:** A cell is composed of one or multiple associated TRPs, i.e. coverage of the cell is composed of coverage of all associated TRP(s). One cell is controlled by one BS. Cell could also be referred to as TRP group (TRPG).

- **Beam sweeping:** In order to cover all possible directions for transmission and/or reception, a number of beams is required. Since it is not possible to generate all these beams concurrently, beam sweeping means to generate a subset of these beams in one time interval and change generated beam(s) in other time interval(s), i.e., changing beam in time domain. So, all possible directions can be covered after several time intervals.

- **Beam sweeping number:** Necessary number of time interval(s) to sweep beams in all possible directions once for transmission and/or reception. In other words, a signaling applying beam sweeping would be transmitted "beam sweeping number" of times within one time period, e.g., the signaling is transmitted in (at least partially) different beam(s) in different times of the time period.

- **UE beam:** UE beam is a beam of a UE, which is used to communicate with the network, e.g., for transmission and/or reception.

- **Serving beam:** serving beam for a UE is a beam generated by network, e.g., TRP, which is used to communicate with the UE, e.g., for transmission and/or reception.

Some or all of following assumption(s) may be adopted in the network side:

- NR using beamforming could be standalone, i.e., UE can directly camp on or connect to NR.

  - $N_R$ using beamforming and NR not using beamforming could coexist, e.g., in different cells.

- TRP would apply beamforming to both data and control signaling transmissions and receptions, if possible and beneficial.

  - Number of beams generated concurrently by TRP depends on TRP capability. For example, maximum number of beams generated concurrently by different TRPs may be different. As another example, maximum number of beams generated concurrently by different TRPs in the same cell may be the same and those in different cells may be different.

■ Beam sweeping is necessary, e.g., for the control signaling to be provided in every direction.

■ (For hybrid beamforming) TRP may not support all combinations for beam generation, e.g. some beams could not be generated concurrently.

• Downlink timing of TRPs in the same cell are synchronized.

• RRC layer of network side is in BS.

• TRP should support both UEs with UE beamforming and UEs without UE beamforming, e.g., due to different UE capabilities or UE releases.

Some or all of following assumption(s) may be adopted in the UE side:

• UE may perform beamforming for reception and/or transmission, if possible and beneficial.

■ Number of beams generated concurrently by UE depends on UE capability, e.g., generating more than one beam is possible.

■ Beam(s) generated by UE is wider than beam(s) generated by TRP, gNB, or eNB.

■ Beam sweeping for transmission and/or reception is generally not necessary for user data but may be necessary for other signaling, e.g. to perform measurement.

■ (For hybrid beamforming) UE may not support all combinations for beam generation, e.g., some beams could not be generated concurrently.

■ Not every UE supports UE beamforming, e.g. due to UE capability or UE beamforming is not supported in NR first (few) release(s).

• One UE is possible to generate multiple UE beams concurrently.

• One UE is possible to be served by multiple (serving) beams from one or multiple TRPs of the same cell.

■ Same or different DL (or UL) data could be transmitted on the same radio resource via different serving beams for diversity or throughput gain.

• There are at least two UE (RRC) states: connected state (or called active state) and non-connected state (or called inactive state or idle state). Inactive state may be an additional state or may belong to connected state or non-connected state.

*Initial access -* After an UE powers on, the UE needs to find a cell to camp on. Then, the UE may initiate a connection establishment to network by itself for registration and/or data transmission. Network could also request the UE to initiate a connection establishment to the network via paging, e.g., in order to transmit DL data to the UE.

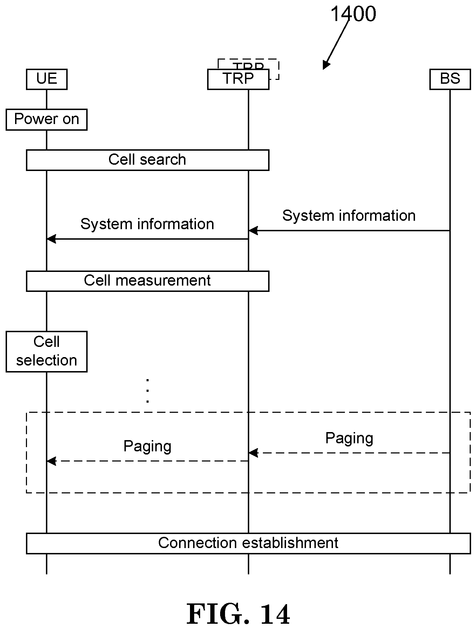

Preferably, as shown in FIG. 14, a case of initial access may have (some or all of) the following steps:

- **Cell search** - Possible carrier frequencies are scanned to find a cell. The cell provides signaling for UEs to identify the cell, e.g. synchronization signal, by beam sweeping. Different TRPs of the same cell would provide the same signaling at the same time interval(s).

- **Broadcasted system information acquisition -** UE acquires necessary parameters (e.g., related to cell selection) from broadcasted system information. The broadcasted system information is provided by beam sweeping.

- **Cell measurement & selection -** After the UE finds a cell which is possible to camp on, the UE should measure the radio condition of the cell and decide whether to camp on the cell based on the measured result. The cell provides signaling for measurement (e.g., reference signal) by beam sweeping. Different TRPs of the same cell would provide the signaling at the same time interval(s).

- **Paging -** Paging may be required when network would like to transmit UE specific signaling/data and the UE is in non-connected state. When the UE receives paging, the UE should initiate connection establishment to enter connected state for reception. The cell provides paging by beam sweeping.

- **Connection establishment -** UE establishes connection to BS via connection establishment procedure. During the procedure, the UE needs to perform random access procedure to let network be aware of the UE and provide resources for UL transmission to UE. After the connection is established, the UE enters connected state. Initial beam(s) to be used for the following transmission(s) would be decided during the procedure.

*Mobility in non-connected state -* After the UE camps on a cell, the UE may move among different beams or TRPs of the cell when the UE is in non-connected state (e.g., idle mode). Or the UE may leave the coverage of the cell and move to coverage of other cell.

Mobility for UE in non-connected state may have (some or all of) the following types:

- **UE beam change -** If UE beamforming is used when the UE is in non-connected state, UE beam(s) may be changed (e.g., due to UE rotation). UE should keep performing beam sweeping to prevent signaling missing due to UE beam(s) change.

- **Serving beam or serving TRP change among the same cell -** In the cell that the UE camps on, the UE is served by TRP(s) who's signaling can be received by the UE. Serving beam(s) of serving TRP(s) may change due to UE mobility. Serving TRP(s) may also change when the UE is moving within the camped on cell. The UE should keep monitoring all possible time intervals for different beams of serving TRP(s), which provides necessary signaling for UEs in non-connected state, to avoid missing signaling.

- **Cell reselection** - The UE keeps performing measurement on the serving cell where the UE camps on and its neighbor cells, and evaluates whether to reselect the serving cell. The UE acquires system information of a neighbor cell and reselects the neighbor cell as the new serving cell if the UE determines that the neighbor cell is more optimal. Parameters for evaluation from network are required.

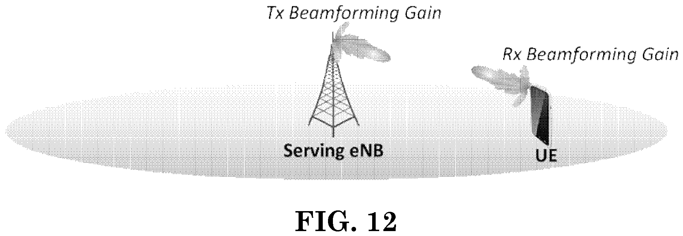

*UE beamforming -* Based on 3GPP R2-162251, to use beamforming in both eNB and UE sides, practically, antenna gain by beamforming in eNB is considered about 15 to 30 dBi and the antenna gain of UE is considered about 3 to 20 dBi. Figure 3 of 3GPP R2-162251 is reproduced as FIG. 12 to illustrate gain compensation by beamforming.

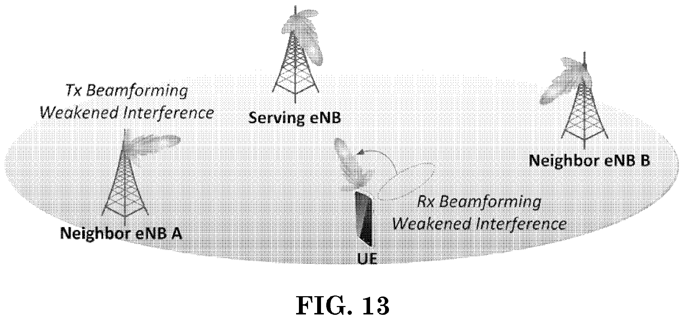

From SINR's perspective, sharp beamforming reduces interference power from neighbor interferers, i.e., neighbor eNBs in downlink case or other UEs connected to neighbor eNBs. In the TX (Transmission) beamforming case, only interference from other TXs whose current beam points the same direction to the RX (Reception) will be the "effective" interference. The "effective" interference means that the interference power is higher than the effective noise power. In RX beamforming case, only interference from other TXs whose beam direction is the same to the UE's current RX beam direction will be the effective interference. Figure 4 of 3GPP R2-162251 is reproduced as FIG. 13 to illustrate weakened interference by beamforming.

UE beamforming is generally beneficial for reception and/or transmission (e.g., in order to increase antenna gain), especially in high frequency band. When the UE is in non-connected state, UE beamforming is beneficial to increase antenna gain (e.g., in order to measure channel quality, acquire system information, and monitor paging). However, the cost is that UE power consumption is increased because UE beam sweeping is needed, and that using UE beam sweeping would take more time for reception. There seems a trade-off between using UE beamforming and not using UE beamforming.

If UE beamforming is enabled when a UE is in non-connected or inactive state, UE beamforming may be used to measure channel quality, acquire system information, and monitor paging. However, the cost is that UE power consumption is increased because UE beam sweeping is needed and using UE beam sweeping would take more time for reception. So, if cell coverage (for common signal) can be guaranteed by network without the need for UE to perform UE beamforming, e.g., in order to support both UEs with UE beamforming capability and UEs without UE beamforming capability, UEs with beamforming capability do not need to perform UE beamforming to receive signaling in non-connected or inactive state, e.g., synchronization signal, reference signal, system information, paging or etc.

The main benefits of antenna gain due to UE beamforming include better transmission/reception performance and higher data rate. The cost is additional signaling overhead for UE beam management. When the UE is in connected state, it is better for network, e.g., gNB or TRP, to control whether to enable or disable UE beamforming based on link quality between UE and network, QoS of the service, and/or availability of signaling resources in the cell.

For UE which supports both omni-directional (with one omni-directional beam) and UE beamforming (with one or multiple directional beams) transmission/reception, when to start performing UE beamforming or whether to use UE beamforming should be considered.

In one method, whether a UE performs UE beamforming could depend on measured result of a cell. The measurement could be done with or without UE beamforming. For example, if measured result (e.g., with or without UE beamforming) of a cell is better than a threshold, the UE does not perform UE beamforming in the cell. If measured result (e.g., with or without UE beamforming) of a cell is worse than another threshold, the UE performs UE beamforming in the cell.

In one example, a UE camping on a cell is currently not using beamforming. If the UE measures the cell and detects that the measured result is worse than a first threshold, the UE would start using beamforming. As another example, a UE camping on a cell is currently using beamforming. If the UE measures the cell and detects that the measured result is better than a second threshold, the UE would stop using beamforming.

Alternatively, whether a UE performs UE beamforming could depend on whether a suitable cell can be found without UE beamforming. As an example, the UE could give priority to select or reselect a cell, where the UE does not need to perform UE beamforming, to camp on. If no such suitable cell can be found, the UE could select or reselect a cell, where the UE needs to perform beamforming and UE beamforming is allowed or supported in the cell, to camp on.

Whether UE beamforming is allowed or supported can be explicitly or implicitly indicated by synchronization signal, reference signal, or system information of the cell.

In one example, upon selecting a cell to camp on (e.g., cell selection) or upon evaluating whether to reselect another cell to camp on (e.g., cell reselection), a UE attempts to find a suitable cell without using UE beamforming. If a suitable cell is found, the UE camps on the cell without using beamforming. If no suitable cell is found, the UE then uses beamforming to find a suitable cell.

In another example, upon selecting a cell to camp on (e.g., cell selection) or upon evaluating whether to reselect another cell to camp on (e.g., cell reselection), if a UE detects that a cell does not support UE beamforming, the UE evaluates the cell without using UE beamforming (or considers that UE beamforming is not used for the cell). If a UE detects that a cell supports UE beamforming, the UE evaluates the cell with or without UE beamforming. Alternatively, the UE could consider prioritization of a cell during selecting a cell to camp on (e.g., cell selection) or upon evaluating whether to reselect another cell to camp on (e.g., cell reselection) at least based on whether the cell supports UE beamforming or not.

In yet another example, when a UE is camping on a cell, the UE could evaluate whether to reselect to another cell based on using or not using UE beamforming. If the UE can camp on the current cell with UE beamforming but cannot camp on the current cell without UE beamforming, and the UE detects that it can camp on a neighbor cell without UE beamforming, the UE could reselect to the neighbor cell.

If the UE performs UE beamforming in a cell, the UE could use UE beamforming to receive at least one of the following signals of the cell: synchronization signal, reference signal, discovery signal, system information, and/or paging. The UE using UE beamforming may require beam sweeping to receive the signal. The UE using UE beamforming or beam sweeping may need to monitor the signal in more time intervals than the UE not using UE beamforming or beam sweeping.

In some cases, a UE in connected state (or connected mode) could decide whether UE beamforming should be performed. For example, when there is radio link failure or beam misaligned, when there is no data transmission between network and the UE for a period of time, or when uplink timing is not aligned, the UE could decide by itself whether UE beamforming is needed for transmission and/or reception (e.g., for measuring channel quality, random access procedure, scheduling request, monitoring DL control signaling, or etc.). The method mentioned above, e.g., based on measurement and threshold(s), could be applied in these cases.

The non-connected state could comprise one or more of the following states: (i) idle state, (ii) inactive state, (iii) suspended state, (iv) a state where the UE has no RRC connection, (v) a state where the UE has no connection to core network, (vi) a state where the UE has no user data traffic for a period of time, and/or (vii) a state where the UE mobility is loosely tracked by network.

The signal that UE measures could comprise one or multiple of the following signals: synchronization signal, reference signal, and/or discovery signal. The measured result could comprise a RSRP (Reference Signal Receiving Power) and/or a RSRQ (Reference Signal Receiving Quality). The threshold(s) could be predefined or provided by network. The UE is capable of UE beamforming.

Synchronization signals are transmitted in downlink to facilitate cell search. Synchronization signal may comprise primary synchronization signals and secondary synchronization signals.

Reference signals are transmitted in downlink to deliver reference point for downlink power. Reference signals may comprise a cell-specific reference signal, a MBSFN (Multicast-Broadcast Single-Frequency Network) reference signal, a UE-specific reference signal, a positioning reference signal, a CSI (Channel State Information) reference signal, and/or a discovery signal.

A UE may assume presence of the discovery signals consisting of cell-specific reference signals, primary and secondary synchronization signals, and configurable CSI reference signals.

In another method, when a UE is in non-connected or inactive state, the UE periodically and omni-directionally monitors downlink signaling, e.g., reference signal, system information, paging (messages), and/or etc. In other words, the UE does not use UE beamforming to monitor the downlink signaling.

In one alternative embodiment, the UE initiates a random access procedure when the UE is in non-connected or inactive state, wherein the UE performs UE beamforming to transmit and/or receive transmission(s) of the random access procedure. The UE may provide an indication to network if the UE performs UE beamforming to transmit and/or receive transmission(s) of the random access procedure, e.g., to indicate UE beamforming has been enabled. Alternatively, UE beamforming may be disabled in response to (successful) completion of the random access procedure.

In another alternative embodiment, the UE initiates a random access procedure when the UE is in non-connected or inactive state, wherein the UE transmits and/or receives transmission(s) of the random access procedure in omni-direction. After the random access procedure is successfully completed, the UE in connected state enables UE beamforming based on an indication from network.

In particular, whether the UE performs UE beamforming to transmit and/or receive transmission(s) of the random access procedure or not is based on (i) UE measurement, (ii) cause to initiate the random access procedure, (iii) indication in the system information, (iv) indication in the paging (message), and/or (v) configuration received from the network when the UE was in connected state.

Furthermore, the UE may inform network about UE beamforming capability during or after the random access procedure. After UE beamforming is enabled, the UE disables UE beamforming based on an indication from network. Network may instruct the UE to disable UE beamforming due to condition change (e.g., link quality, traffic amount, or availability of signaling resources in the cell). The UE disables UE beamforming in response to leaving connected state. Alternatively, the UE disables UE beamforming in response to release of RRC connection.

Also, the non-connected state may be idle state, suspended state, a state where the UE has no RRC connection, a state where the UE has no connection to core network, a state where the UE has no user data traffic for a period of time, and/or a state where the UE mobility is loosely tracked by network. In addition, the network may be CU, DU, TRP, BS, gNB, or cell.

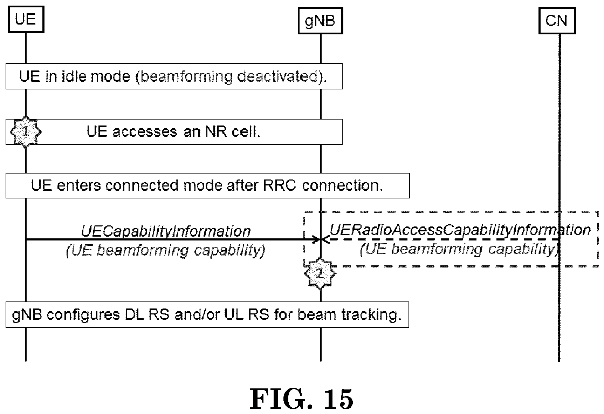

More specifically, resources of random access procedure with UE beamforming may be different from resources of random access procedure without UE beamforming. This could allow the network to know whether UE beamforming is enabled by the UE when receiving the random access preamble from the UE. The resources may be preamble sequences, radio resources for preamble transmission, identifier for random access procedure, e.g. RA-RNTI, or etc. The resources are indicated by system information. Two possible timings to enable UE beamforming are generally shown in FIG. 15.

*UE beamforming enabled/disabled in connected state -* When the UE is in connected state and the UE supports UE beamforming, network could control whether UE beamforming is necessary to be enabled or not, e.g. based on radio condition, amount of traffic, or etc.

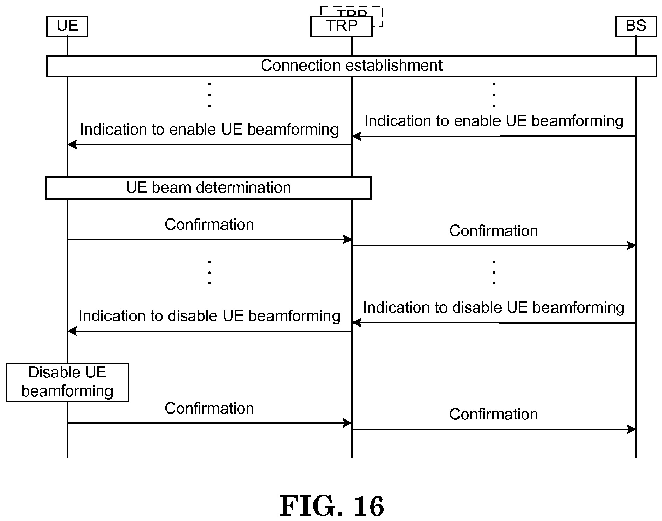

As shown in FIG. 16, UE beamforming enabled/disabled may have some or all of the following steps:

- *Enable UE beamforming* - Network (e.g., BS and/or TRP) would transmit an indication, e.g. via RRC message, to request the UE to enable UE beamforming for the following transmission and reception. When the UE receives the indication, the UE should determine which UE beam(s) to be used and use UE beamforming for the following transmission and reception. And the UE responds a confirmation by UE beamforming. The UE may be able to communicate with multiple TRPs simultaneously after enabling UE beamforming.

- *Disable UE beamforming* - Network (e.g., BS and/or TRP) would transmit an indication to request the UE to disable UE beamforming for the following transmission and reception. When the UE receives the indication, the UE should stop using UE beamforming and respond a confirmation omnidirectionally.

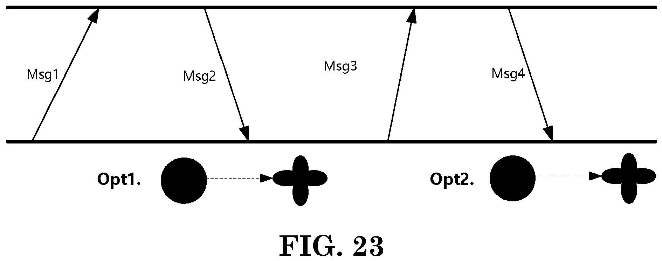

An additional method is described. When a UE is going to enter connected state, random access procedure may possibly be required. The UE could initially perform omnidirectional reception and transmission in the random access procedure as default to prevent additional power consumption and delay. In an alternative embodiment, whether the UE starts performing UE beamforming could depend on the number of failure attempts or the utilized transmission power during the random access procedure. For example, if number of attempt reaches to a threshold or transmission power is ramped up to a threshold (e.g., maximum UE transmission power) and the random access procedure is still not successful, the UE could switch to perform UE beamforming for reception and transmission, e.g., to transmit preamble. Alternatively, whether UE starts performing UE beamforming could be controlled by a network during the random access procedure, e.g., via Msg2 or Msg4 as shown in FIG. 23. The network could measure Msg1 and/or Msg3 to determine whether the UE should perform UE beamforming for the following reception and transmission.

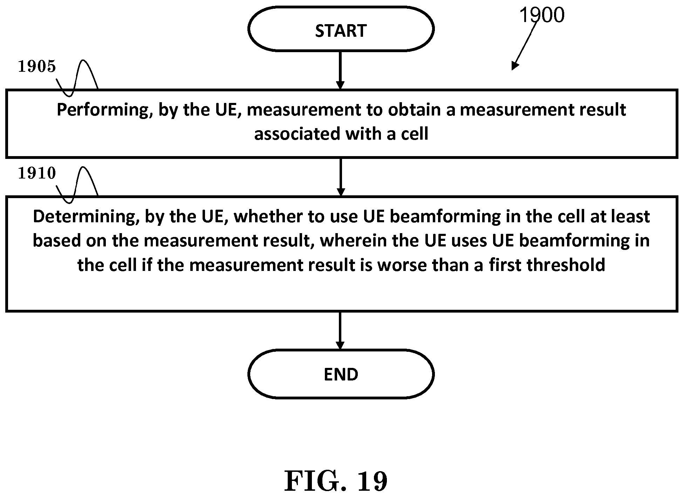

FIG. 19 is a flow chart 1900 according to one exemplary embodiment from the perspective of a UE. In step 1905, the UE performs a measurement to obtain a measurement result associated with a cell. In step 1910, the UE determines whether to use UE beamforming in the cell at least based on the measurement result, wherein the UE uses UE beamforming in the cell if the measurement result is worse than a first threshold.

Referring back to FIGS. 3 and 4, in one exemplary embodiment of a UE, the device 300 includes a program code 312 stored in the memory 310. The CPU 308 could execute program code 312 to enable the UE (i) to perform a measurement to obtain a measurement result associated with a cell, and (ii) to determine whether to use UE beamforming in the cell at least based on the measurement result, wherein the UE uses UE beamforming in the cell if the measurement result is worse than a first threshold. Furthermore, the CPU 308 can execute the program code 312 to perform all of the above-described actions and steps or others described herein.

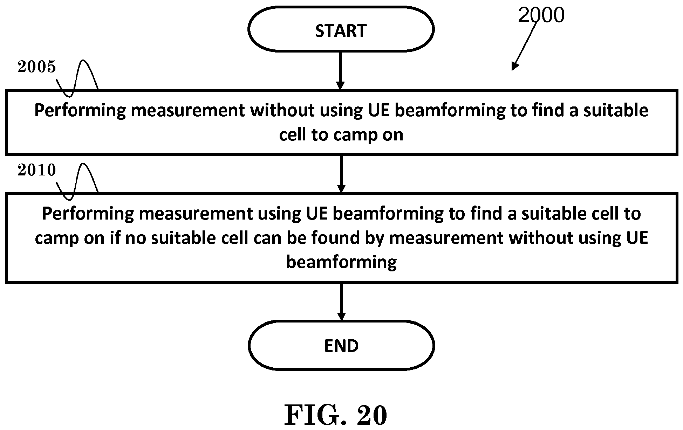

FIG. 20 is a flow chart 2000 according to one exemplary embodiment from the perspective of a UE. In step 2005, the UE performs measurement without using UE beamforming to find a suitable cell to camp on. In step 2010, the UE performs measurement using UE beamforming to find a suitable cell to camp on if no suitable cell can be found by measurement without using UE beamforming.

Referring back to FIGS. 3 and 4, in one exemplary embodiment of a UE, the device 300 includes a program code 312 stored in the memory 310. The CPU 308 could execute program code 312 to enable the UE (i) to perform measurement without using UE beamforming to find a suitable cell to camp on, and (ii) to perform measurement using UE beamforming to find a suitable cell to camp on if no suitable cell can be found by measurement without using UE beamforming. Furthermore, the CPU 308 can execute the program code 312 to perform all of the above-described actions and steps or others described herein.

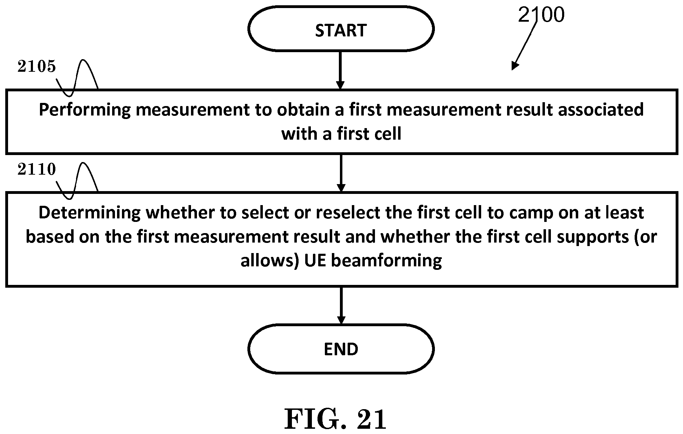

FIG. 21 is a flow chart 2100 according to one exemplary embodiment from the perspective of a UE. In step 2105, the UE performs measurement to obtain a first measurement result associated with a first cell. In step 2110, the UE determines whether to select or reselect the first cell to camp on at least based on the first measurement result and whether the first cell supports (or allows) UE beamforming.

Referring back to FIGS. 3 and 4, in one exemplary embodiment of a UE, the device 300 includes a program code 312 stored in the memory 310. The CPU 308 could execute program code 312 to enable the UE (i) to perform measurement to obtain a first measurement result associated with a first cell, and (ii) to determine whether to select or reselect the first cell to camp on at least based on the first measurement result and whether the first cell supports (or allows) UE beamforming. Furthermore, the CPU 308 can execute the program code 312 to perform all of the above-described actions and steps or others described herein.

In the context of the embodiments disclosed in FIGS. 19, 20, and 21 and discussed above, the UE uses UE beamforming in the cell if the measurement result is worse than a first threshold. The UE does not use UE beamforming in the cell if the measurement result is better than a second threshold. The UE starts using UE beamforming if the measurement result becomes worse than a first threshold. The UE stops using UE beamforming if the measurement result becomes better than a second threshold.

Furthermore, the measurement could be performed with UE beamforming. Alternatively, the measurement could be performed without UE beamforming. The threshold (e.g., the first threshold, the second threshold) could be predefined or provided by a network (e.g., in system information). The cell could be a serving cell or a neighbor cell of the UE.

Preferably, the UE considers that the cell that can be camped on without UE beamforming has higher priority than a cell that cannot be camped on without UE beamforming. The UE could use UE beamforming after no suitable cell can be found without using UE beamforming. The UE could find a suitable cell to camp on during cell selection or reselection. The UE does not use UE beamforming if a suitable cell can be found without using UE beamforming.

Preferably, the UE considers priority of the first cell at least based on whether the first cell supports UE beamforming. The UE could prioritize the first cell if the first cell supports UE beamforming. The UE considers that the first cell has higher priority than a second cell if the first cell supports UE beamforming and the second cell doesn't support UE beamforming. Whether the cell supports (or allows) UE beamforming is implicitly or explicitly indicated by at least one of the following signals of cell: synchronization signal, reference signal, and/or system information.

Preferably, the UE does not use UE beamforming if a suitable cell can be found without using UE beamforming. The UE could use UE beamforming if no suitable cell can be found without using UE beamforming.

Preferably, the UE attempts to camp on a cell with higher priority before attempting to camp on a cell with lower priority. The UE could perform measurement by at least measuring synchronization signal, reference signal, and/or discovery signal of a cell. The measurement result could be indicated by RSRP and/or RSRQ.

Preferably, the evaluation or the determination could be performed during cell selection or cell reselection procedure.

Preferably, the UE is capable of using UE beamforming. The UE does not use UE beamforming if the cell does not support (or allow) UE beamforming. The UE beamforming could be used to monitor (or receive) a signal of the cell. The UE, which uses beamforming, uses beam sweeping to receive the signal. The signal could comprise a synchronization signal, a reference signal, a system information, and/or paging.

Preferably, the synchronization signal could be transmitted in downlink to facilitate cell search. The synchronization signal could comprise one or more of the following signals: a primary synchronization signal and/or a secondary synchronization signal. The reference signal could be transmitted in downlink to deliver reference point for downlink power. The reference signal could comprise one or more of the following signals: a cell-specific reference signal, a MBSFN reference signal, a UE-specific reference signal, a positioning reference signal, a CSI reference signal, a discovery signal, and/or a beam specific reference signal.

Preferably, the UE could be in a non-connected state, an idle state, an inactive state, or a connected state (or connected mode). The UE could be in a state where (i) the UE has no RRC connection, (ii) the UE has no connection to core network, (iii) the UE has no use data traffic for a period of time, or (iv) the UE mobility is loosely tracked by a network.

Preferably, the UE could perform the determination if the UE detects a radio link failure or a beam misalignment, or if there is no data transmission between the UE and a network for a period of time. The UE could determine whether to use UE beamforming if uplink timing of the UE is not aligned. The UE could use UE beamforming for measuring channel quality, for a transmission and/or reception in a random access procedure, for scheduling request, and/or for monitoring DL (Downlink) control signalling.

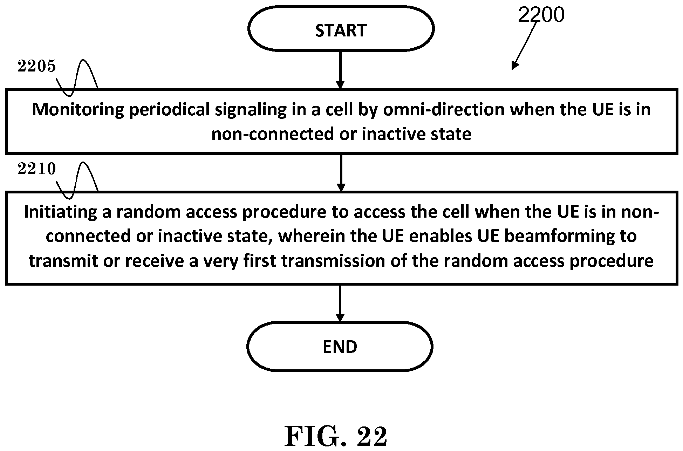

FIG. 22 is a flow chart 2200 according to one exemplary embodiment from the perspective of a UE. In step 2205, the UE monitors periodical signaling in a cell by omni-direction when the UE is in non-connected or inactive state. Preferably, monitoring periodical signaling in a cell by omni-direction means that the UE generates one omni-directional beam to receive the periodical signaling.

In step 2210, the UE initiates a random access procedure to access the cell when the UE is in non-connected or inactive state, wherein the UE enables UE beamforming to transmit or receive a very first transmission of the random access procedure. Preferably, enabling UE beamforming to transmit or receive the very first transmission means that the UE generates at least one directional beam to transmit or receive the very first transmission.

Preferably, the UE does not enable UE beamforming for reception when the UE is in non-connected or inactive state. The UE does not use UE beamforming to monitor the periodical signaling when the UE is in non-connected or inactive state. The UE could enable UE beamforming in response to initiation of the random access procedure.

Preferably, the periodical signaling could be a synchronization signal, a reference signal, a system information, and/or a paging (or paging message). Furthermore, the non-connected state could be idle state. The cell could support network (or TRP) beamforming. The cell could support UE beamforming.

Preferably, the UE beamforming could be enabled based on one or more of the following conditions or factors:

(i) radio condition of the cell (e.g., if measurement result for the cell is lower than a threshold),

(ii) a cause to initiate the random access procedure,

(iii) a cause to establish a RRC connection,

(iv) a QoS of service (e.g., which is related to initiation of the random access procedure),

(v) an indication in system information (e.g., UE beamforming is used for random access procedure),

(vi) an indication in a paging (message) (which pages the UE) (e.g., paged UE performs UE beamforming for random access procedure or paged UE enables UE beamforming),

(vii) stored (dedicated) configuration which was received when the UE was in connected state, and/or

(viii) UE mobility (e.g., if UE mobility is low or UE does not change camping cell after entering non-connected or inactive state or after releasing RRC connection).

Preferably, the very first transmission could be a message carrying the UE identity, a random access preamble, or a random access response (e.g., a response to preamble).

Preferably, the UE could transmit or receive all transmission(s) of the random access procedure by UE beamforming. The UE could transmit Msg3 of the random access procedure by UE beamforming. The UE could receive contention resolution of the random access procedure by UE beamforming. The UE could disable the UE beamforming in response to completion of the random access procedure.

Preferably, the UE could enter connected state after the random access procedure is successfully completed. The RRC connection could be established after the random access procedure is successfully completed. In addition, the UE could disable UE beamforming in response to leaving connected state. The UE could disable UE beamforming in response to release of RRC connection.

Preferably, the UE does not transmit any transmission of the random access procedure before transmitting the very first transmission. The UE does not receive any transmission of the random access procedure before receiving the very first transmission.

Referring back to FIGS. 3 and 4, in one exemplary embodiment of a UE, the device 300 includes a program code 312 stored in the memory 310. The CPU 308 could execute program code 312 to enable the UE (i) to monitor periodical signaling in a cell by omni-direction when the UE is in non-connected or inactive state, and (ii) to initiate a random access procedure to access the cell when the UE is in non-connected or inactive state, wherein the UE enables UE beamforming to transmit or receive a very first transmission of the random access procedure. Furthermore, the CPU 308 can execute the program code 312 to perform all of the above-described actions and steps or others described herein.

Based on above method(s) and/or embodiment(s), UE beamforming could be enabled when necessary. Unnecessary UE beamforming could be avoided and power consumption could be reduced.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium.

A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method of a User Equipment, in the following also referred to as UE, comprising:

   performing, by the UE, measurement to obtain a measurement result associated with a cell (1905); and determining, by the UE, whether to use UE beamforming in the cell at least based on the measurement result, wherein the UE uses the UE beamforming in the cell if the measurement result is worse than a first threshold (1910).

2. The method of claim 1, wherein the UE does not use the UE beamforming in the cell if the measurement result is better than a second threshold.

3. The method of claim 1 or 2, wherein the UE performs the determination if radio link failure is detected by the UE.

4. The method of any one of claims 1 to 3, wherein the UE performs the determination if beam misalignment is detected by the UE.

5. The method of any one of claims 1 to 4, wherein the UE determines whether to use the UE beamforming if uplink timing of the UE is not aligned.

6. The method of any one of claims 1 to 5, wherein the UE uses the UE beamforming for a transmission and/or reception in a random access procedure.

7. The method of any one of claims 1 to 6, wherein the first threshold and/or the second threshold is provided in system information.

8. The method of any one of claims 1 to 7, wherein the UE considers that a first cell has higher priority to camp on than a second cell if the first cell supports the UE beamforming and the second cell doesn't support the UE beamforming.

9. The method of any one of claims 1 to 8, wherein the determination is performed during cell selection or cell reselection procedure.

10. The method of any one of claims 1 to 9, wherein the UE beamforming is to form at least one beam for directional signal transmission and/or reception by the UE.

11. A User Equipment, in the following also referred to as UE, (300), comprising:

    a control circuit(306);
    a processor(308) installed in the control circuit(306); and
    a memory(310) installed in the control circuit(306) and operatively coupled to the processor (308);
    wherein the processor (308) is configured to execute a program code (312) stored in the memory (310) to perform the method steps as defined in any one of the preceding claims.

**FIG. 1**

**FIG. 2**

_300_

INPUT
DEVICE
_302_

OUTPUT
DEVICE
_304_

CONTROL CIRCUIT _306_

CPU _308_

MEMORY _310_

PROGRAM CODE _312_

TRANSCEIVER _314_

# FIG. 3

PROGRAM CODE *312*

APPLICATION LAYER *400*

LAYER 3 *402*

LAYER 2 *404*

LAYER 1 *406*

FIG. 4

FIG. 5

**FIG. 6**

**FIG. 7**

Different deployment scenarios with Single TRP cell

# FIG. 8

Different deployment scenarios with multiple TRPs Cell

# FIG. 9

**FIG. 10**

FIG. 11

*Tx Beamforming Gain*

*Rx Beamforming Gain*

**Serving eNB**

**UE**

## FIG. 12

Tx Beamforming
Weakened Interference   Serving eNB

Neighbor eNB B

Rx Beamforming
Weakened Interference

Neighbor eNB A

UE

## FIG. 13

FIG. 14

**FIG. 15**

**FIG. 16**

UE            eNB

① ——Random Access Preamble——▶

◀——Random Access Response—— ②

③ ——Scheduled Transmission——▶

◀——Contention Resolution—— ④

# FIG. 17

UE                                    eNB

⓪ ◄—————RA Preamble assignment—————

——————Random Access Preamble——————► ①

② ◄—————Random Access Response—————

# FIG. 18

1900

START

**Performing, by the UE, measurement to obtain a measurement result associated with a cell**

**Determining, by the UE, whether to use UE beamforming in the cell at least based on the measurement result, wherein the UE uses UE beamforming in the cell if the measurement result is worse than a first threshold**

END

## FIG. 19

2000

START

2005

Performing measurement without using UE beamforming to find a suitable cell to camp on

2010

Performing measurement using UE beamforming to find a suitable cell to camp on if no suitable cell can be found by measurement without using UE beamforming

END

FIG. 20

```
                    ┌─────────────────┐        2100
                    │      START      │       ╱
                    └─────────────────┘      ↙
                             │
2105                         ▼
┌───────────────────────────────────────────────────────────────────┐
│   Performing measurement to obtain a first measurement result       │
│                   associated with a first cell                      │
└───────────────────────────────────────────────────────────────────┘
2110                         │
                             ▼
┌───────────────────────────────────────────────────────────────────┐
│  Determining whether to select or reselect the first cell to camp   │
│  on at least based on the first measurement result and whether the   │
│          first cell supports (or allows) UE beamforming             │
└───────────────────────────────────────────────────────────────────┘
                             │
                             ▼
                    ┌─────────────────┐
                    │       END       │
                    └─────────────────┘
```

## FIG. 21

2200

START

2205

Monitoring periodical signaling in a cell by omni-direction when the UE is in non-connected or inactive state

2210

Initiating a random access procedure to access the cell when the UE is in non-connected or inactive state, wherein the UE enables UE beamforming to transmit or receive a very first transmission of the random access procedure

END

FIG. 22

Msg1

Msg2

Msg3

Msg4

Opt1.

Opt2.

FIG. 23

Europäisches
Patentamt

European
Patent Office

Office européen
des brevets

**EUROPEAN SEARCH REPORT**

Application Number

EP 17 17 3058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 509 364 A1 (ALCATEL LUCENT [FR]) 10 October 2012 (2012-10-10) * paragraphs [0025] - [0029] * ----- | 1-11 | INV. H04B7/06 H04B7/08 |
| X | US 2016/043792 A1 (JEONG CHEOL [KR] ET AL) 11 February 2016 (2016-02-11) * paragraphs [0042], [0045], [0079] - [0082], [0108] - [0109]; figure 6 * ----- | 1-11 | |
| X | US 2005/176468 A1 (IACONO ANA LUCIA [US] ET AL) 11 August 2005 (2005-08-11) * paragraphs [0027] - [0028]; figure 3 * ----- | 1,2,9-11 | |

**TECHNICAL FIELDS SEARCHED (IPC)**

H04B

The present search report has been drawn up for all claims

| Place of search | Date of completion of the search | Examiner |
|---|---|---|
| Munich | 8 November 2017 | Franz, Volker |

EPO FORM 1503 03.82 (P04C01)

## ANNEX TO THE EUROPEAN SEARCH REPORT
## ON EUROPEAN PATENT APPLICATION NO.

EP 17 17 3058

This annex lists the patent family members relating to the patent documents cited in the above-mentioned European search report.
The members are as contained in the European Patent Office EDP file on
The European Patent Office is in no way liable for these particulars which are merely given for the purpose of information.

08-11-2017

| Patent document cited in search report | | Publication date | Patent family member(s) | | Publication date |
|---|---|---|---|---|---|
| EP 2509364 | A1 | 10-10-2012 | BR 112013025960 A2 | | 20-12-2016 |
| | | | CN 103460757 | A | 18-12-2013 |
| | | | EP 2509364 | A1 | 10-10-2012 |
| | | | JP 5805295 | B2 | 04-11-2015 |
| | | | JP 2014515212 | A | 26-06-2014 |
| | | | KR 20140004217 | A | 10-01-2014 |
| | | | US 2014031046 | A1 | 30-01-2014 |
| | | | WO 2012136539 | A1 | 11-10-2012 |
| US 2016043792 | A1 | 11-02-2016 | CN 106663860 | A | 10-05-2017 |
| | | | EP 3178170 | A1 | 14-06-2017 |
| | | | KR 20160018074 | A | 17-02-2016 |
| | | | US 2016043792 | A1 | 11-02-2016 |
| | | | WO 2016022004 | A1 | 11-02-2016 |
| US 2005176468 | A1 | 11-08-2005 | CN 101019329 | A | 15-08-2007 |
| | | | EP 1719351 | A2 | 08-11-2006 |
| | | | JP 4575926 | B2 | 04-11-2010 |
| | | | JP 2007525893 | A | 06-09-2007 |
| | | | KR 20060111712 | A | 27-10-2006 |
| | | | TW I271983 | B | 21-01-2007 |
| | | | TW I364997 | B | 21-05-2012 |
| | | | US 2005176468 | A1 | 11-08-2005 |
| | | | WO 2005076839 | A2 | 25-08-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Beam Forming Impacts. *3GPP, including: R2-162366*
- Discussion on terminology of beamforming based high frequency NR. *R2-163716*
- Beam support in NR. *R2-162709*
- Active Mode Mobility in NR: SINR drops in higher frequencies. *R2-162762*
- TR 38.801 V0.1.0, Study on New Radio Access Technology; Radio Access Architecture and Interfaces. *R3-160947*
- Summary of email discussion [93bis#23][NR] Deployment scenarios. *R2-164306*
- *3GPP RAN2#94 meeting minute*
- RAN2 Impacts in HF-NR. *R2-163879*

- Beam level management <-> Cell level mobility. *R2-162210*
- Cell concept in NR. *R2-163471*
- General considerations on LTE-NR tight interworking. *R2-164270*
- RAN2 aspects of high frequency New RAT. *R2-162251*
- E-UTRA; UE procedures in idle mode (Release 13). *TS 306.304*
- E-UTRA and E-UTRAN; Overall description; Stage 2. *TS 36.300*
- E-UTRA; Physical layer procedure (Release 13). *TS 36.213*